# EUROPÄISCHE PATENTANMELDUNG

(11) **EP 1 279 878 A2**
(43) Veröffentlichungstag der Anmeldung: **29.01.2003**
(21) Anmeldenummer: 02013849.1
(22) Anmeldetag: 22.06.2002
(51) Int. Cl.: F16L 9/00

(54) **Rohrprofil mit ovalem Querschnitt**

(30) Priorität: 18.07.2001 DE 10134271
(71) Anmelder: gabo Systemtechnik GmbH, 94559 Niederwinkling (DE)
(72) Erfinder: Bauer, Peter, 94357 Konzell (DE); Lausser, Franz, 98185 Michelsneukirchen (DE); Buchner, Peter, 94327 Bogen (DE); Salzberger, Christian, 94374 Schwarzach (DE)

(57) **Zusammenfassung**

Die Erfindung bezieht sich auf ein Rohrprofil mit im wesentlichen ovalen Querschnitt, beispielsweise aus Weichstahl, Kupfer, Kunststoffen usw. für Fluidleitungen, wie z.B. Heiz- und/oder Kühlregister, Wasserleitungen, mit einen Querschnitt, der aus zwei in der Längsachse des Rohres versetzten Halbkreisen und einem Radius besteht deren Mittelpunkte einen bestimmten Abstand voneinander aufweisen und deren eine Kreislinie bildende Wanddicke durch zwei etwa gerade Wandbereiche und der Länge verbunden sind.

## Beschreibung

Die Erfindung bezieht sich auf ein Rohrprofil für Fluidleitungen mit ovalem Querschnitt für den beispielsweisen Einsatz als Heiz- und/oder Kühlregister, Wasserleitungen oder dergl.

Rohre für solche Fluidleitungen weisen allgemein einen rundem Querschnitt auf. Sie sind für die unterschiedlichsten Einsatzgebiete geeignet und an sich bekannt. Rohre mit rundem Querschnitt weisen aber den Nachteil auf, bei Verlegung in einer Ebene als Mäander oder in Schneckenform keine bevorzugte Biegerichtung zu besitzen und folglich ein Drall im verlegten und auch bereits im noch nicht verlegten Zustand entsteht, der stets Spannungen verursacht.

Um dieses Problem zu beheben wurden bereits Rohre mit ovalem Querschnitt vorgeschlagen. Beispielsweise offenbaren die DE 20 18 530 A1, die DE 31 11 348 A1 und die DE 31 16 872 A1 Rohre mit ovalem Querschnitt und Halterungen dafür. Diese Rohre mit ovalem Querschnitt weisen dafür jedoch einen anderen, gravierenden Nachteil auf; denn solche Rohre sind einerseits äußerst steif und müssen deshalb vor der Verlegung erwärmt werden, andererseits müssen solche Rohre zum Zwecke der Verbindung mit einem Fitting, z.B. Verschraubung an einem Verteiler oder dergl. zunächst mit einem Rohr mit rundem Querschnitt verschweißt werden. Es liegt auf der Hand, dass solche Manipulationen, vor allem auf Baustellen, umständlich, aufwändig und teuer sind.

Der Erfindung, wie sie in den Ansprüchen beschrieben ist, liegt daher die Aufgabe zugrunde, ein Rohr zu schaffen, dass diese Nachteile nicht aufweist, keinen Drall besitzt und auf einfache Weise als Rohrregister in einer Ebene verlegbar ist, ohne weitere Manipulationen mit Fittings verbunden werden kann und auch verlängerbar ist.

Die mit der Erfindung erzielten Vorteile sind insbesondere das vereinfachte Biegen um seine Hochachse ohne jeden behindernden Drall, verursacht durch die seitliche Abflachung und, wegen der gleichmäßigen Rundung in den Scheitelbereichen des Rohres und die Begrenzung der Radiusabweichung auf ein bestimmtes Maß kann das Rohr problemlos auf eine Stützhülse, beispielsweise bei einer Rohrverbindung mit kreisrundem Querschnitt, aufgebracht werden, wodurch Verbindungen zwischen Rohren untereinander, Rohren und Fittings, mit Verteileranschlüssen usw. auf einfache Art ermöglicht werden.

Die Erfindung ist nachstehend anhand eines in den Abbildungen dargestellten Ausführungsbeispieles näher erläutert.

Es zeigt:
Fig. 1 die Konturen eines erfindungsgemäßen Rohrprofiles im Schnitt,

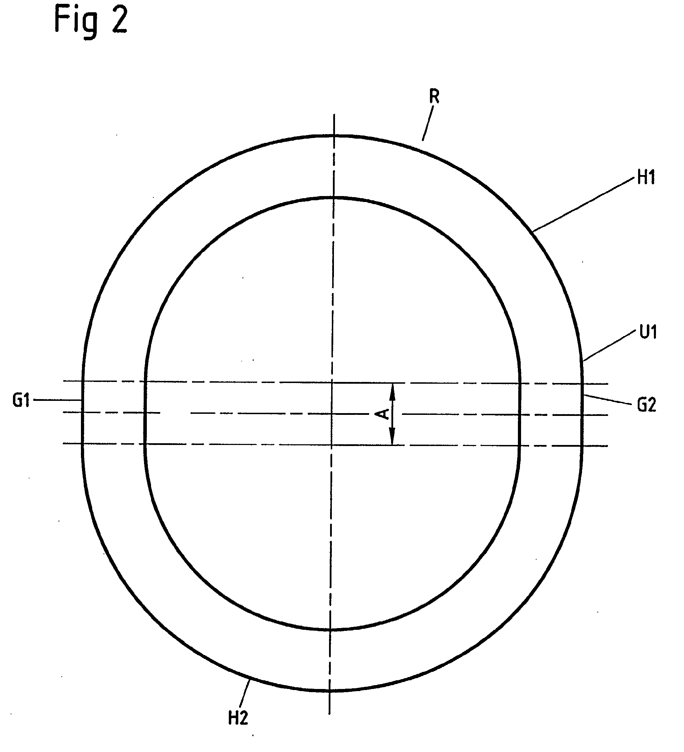

Fig. 2 den Schnitt gem. Fig. 1 in vereinfachter Darstellung und

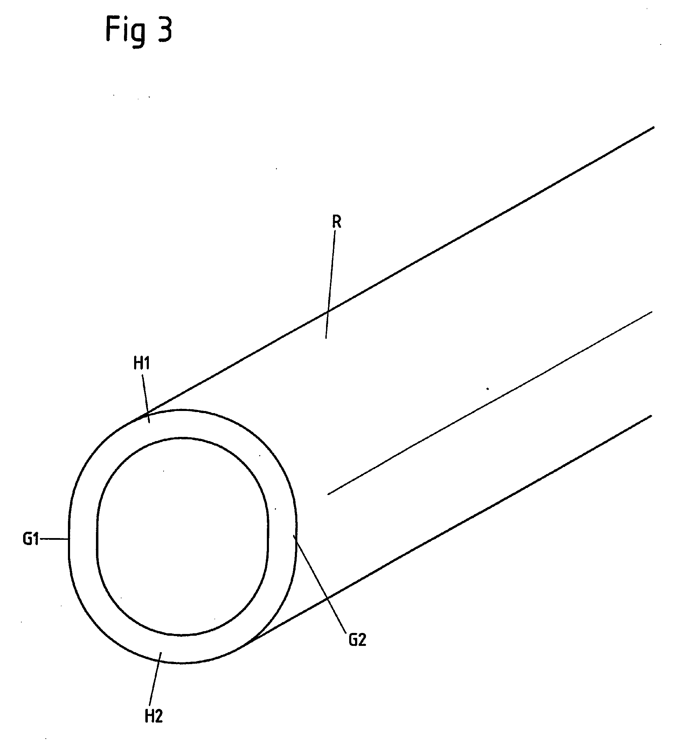

Fig. 3 eine perspektivische Darstellung einer Rohrprofiles gem. Fig. 1 und Fig. 2.

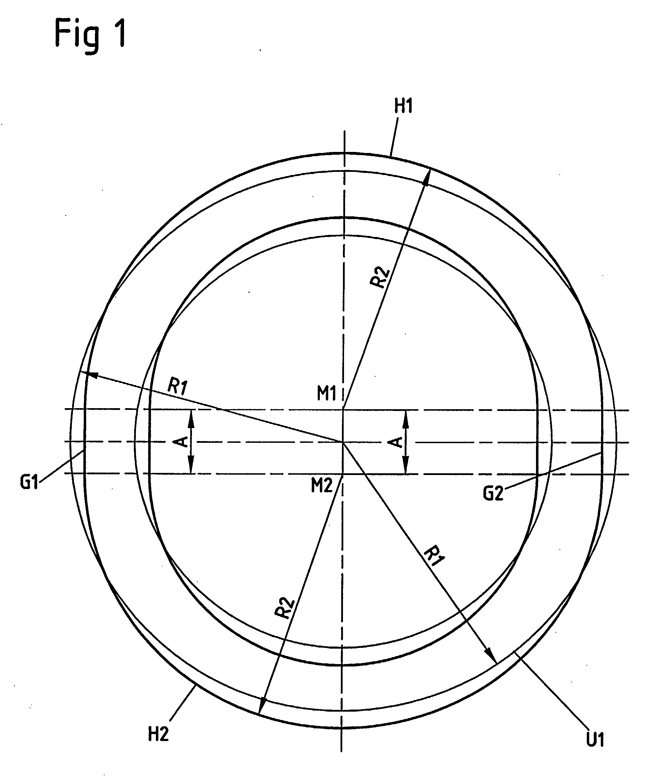

Die Darstellung des Rohrprofiles gem. den Abbildungen zeigt insbesondere in der Fig. 1 den Verlauf der Konturen des Rohrprofiles. Die beiden Halbkreise H1 und H2 weisen jeweils einen Radius R2 auf und besitzen je einen Mittelpunkt M1, M2 die um den Abstand A in der Längsachse des Rohrprofiles versetzt sind. Die ausgezogene Kreislinien begrenzen die Wand des Rohrprofiles nach außen. Zwischen die solcherart gebildeten Außenkonturen ist je ein etwa gerade verlaufendes Zwischenstück G1 und G2 eingefügt, welches die Länge der des Abstandes A der beiden Halbschalen H1 und H2 aufweist.

Der Radius R2 der beiden Halbkreise H1, H2 ist maximal um 20% kürzer als der Radius R1. Dieser Radius beschreibt einen Kreis dessen Umfang U1 gleich dem Umfang des Rohrprofiles U2 bestehend aus der Summe der Kreislinien der beiden Halbkreise H1, H2 und den Geraden G1, G2 ist.

Somit ist ein durch die Halbkreise H1 und H2 und die geraden Zwischenstücke G1 und G2 begrenztes Rohrprofil R geschaffen, dessen Innenkontur zu der Außenkontur parallel verläuft und, je nach Abstand beider Konturen voneinander, die Wanddicke des Rohrprofiles bestimmt, die aus zwei Halbschalen und den beiden geraden Zwischenstücken besteht.

Das Rohrprofil R kann aus verschiedenen Werkstoffen hergestellt werden. Besonders eignen sich Weichstahl, Kupfer oder Kunststoffe, wie z.B. Polymere und ist vorteilhafterweise im Extrusionsverfahren herzustellen.

## Patentansprüche

1. Rohrprofil für Fluidleitungen mit ovalem Querschnitt, **gekennzeichnet durch** einen Querschnitt, der aus zwei in der Längsachse des Rohres versetzten Halbkreisen (H1) und (H2) mit einem Radius (R2) besteht deren Mittelpunkte (M1) und (M2) einen Abstand (A) voneinander aufweisen und deren eine Kreislinie bildende Wanddicke (W) **durch** zwei etwa gerade Wandbereiche (G1) und (G2) der Länge (A) verbunden sind.

2. Rohrprofil nach Anspruch 1, **dadurch gekennzeichnet, dass** der Radius (R2) maximal 20% kürzer ist als der Radius (R1) eines Kreises dessen Umfang (U1) gleich dem Umfang des Rohres (U2), bestehend aus der Summe der Kreislinien der beiden Halbkreis (H1) und (H2) und der Geraden (G1) und (G2), ist.

3. Rohrprofil nach Anspruch 1, **dadurch gekennzeichnet, dass** der Querschnitt des Rohres (R) im wesentlichen aus zwei voneinander um den Abstand (A) versetzten Halbschalen besteht, die beidseitig durch fast parallel zur dessen Längsachse verlaufende Wandbereiche (G1) und (G2) mit der Länge (A) zu einem geschlossenen Rohrprofil (R) mit im wesentlichen gleichmäßiger Wanddicke ergänzt sind.

4. Rohrprofil nach Anspruch 1 und einen der folgenden, **dadurch gekennzeichnet, dass** das Rohrprofil (R) insgesamt im Urformprozess durch Strangpressen erzeugt ist.
